# EUROPÄISCHE PATENTSCHRIFT

(11) **EP 2 879 937 B1**
(45) Veröffentlichungstag und Bekanntmachung des Hinweises auf die Patenterteilung: **31.08.2016**
(21) Anmeldenummer: 13742475.0
(22) Anmeldetag: 01.08.2013
(51) Int. Cl.: B62D 1/20, B62D 1/16

(54) **SCHUTZABDECKUNG FÜR EINE LENKSPINDEL**
PROTECTIVE COVER FOR A STEERING SPINDLE
RECOUVREMENT PROTECTEUR POUR UN ARBRE DE DIRECTION

(30) Priorität: 01.08.2012 DE 102012107023
(43) Veröffentlichungstag der Anmeldung: 10.06.2015
(73) Patentinhaber: Ford-Werke GmbH, 50735 Köln (DE)
(72) Erfinder: SICKERT, Dirk, 50321 Brühl (DE); TEBBE, Kristian, 50354 Hürth (DE); HEIDL, Joachim, 34132 Kassel (DE); HOHMANN, Jens, 34260 Kaufungen (DE)
(74) Vertreter: Dörfler, Thomas
(86) Internationale Anmeldenummer: PCT/EP2013/066204
(87) Internationale Veröffentlichungsnummer: WO 2014/020116

(56) Entgegenhaltungen:
- JP-A- 2005 199 734
- US-A- 4 826 466

## Beschreibung

Die Erfindung betrifft eine Lenksäule für ein Kraftfahrzeug, die die Merkmale des Oberbergriffs des unabhängigen Patentanspruchs 1 aufweist.

Die Schutzabdeckung einer solchen Lenksäule schirmt das Drehgelenk der Lenkspindel zu dem angrenzenden Fußraum hin ab, um den Fahrer des Kraftfahrzeugs vor einer Berührung mit dem Gelenk und damit einhergehenden Verletzungen und Verunreinigungen zu schützen. Damit wird umgekehrt auch das Gelenk vor seine Funktion beeinträchtigenden Verunreinigungen geschützt.

Die US 4,826,466 A offenbart eine nachgiebige Schutzabdeckung für eine Lenksäule eines Fahrzeuges, welche an der Stirnwand und dem Lenkgetriebegehäuse befestigt ist.

Aus der DE 10 2004 008 505 A1 ist ein Faltenbalg als Schutzabdeckung für ein Drehgelenk einer Lenkspindel bekannt. Der Faltenbalg muss vor deren Montage auf die Lenkspindel aufgeschoben werden und wird an einer Antriebs- und einer Abtriebswelle der Lenkspindel, die über das Drehgelenk miteinander in Verbindung stehen, drehfest befestigt. Die nötige Flexibilität für eine ungehinderte Bewegung des Drehgelenks und der daran angeschlossenen, relativ zueinander verschwenkbaren Antriebs- und Abtriebswellen wird erreicht, indem der Durchmesser des Faltenbalgs ausreichend groß gewählt wird und eine ausreichende Zahl an Falten aufweist. Der Faltenbalg beansprucht dadurch Bauraum sowohl zum Fußraum hin als auch auf der dem Fußraum abgekehrten Seite der Lenkspindel.

Bei einer aus der JP2005-199734 A bekannten Lenksäule mit den Merkmalen des Oberbegriffs des unabhängigen Patentanspruchs 1 ist die Schutzabdeckung für das Drehgelenk der Lenkspindel an der Karosserie befestigt und schirmt einen vor einem Stirnwandblech der Karosserie liegenden Raum für die Lenkspindel gegenüber dem Fußraum ab. Für eine ungehinderte Bewegung des Drehgelenks und der daran angeschlossenen Antriebs- und Abtriebswellen relativ zueinander und zu der Karosserie muss dieser Raum eine nicht unerhebliche Größe aufweisen, die zu Lasten des Fußraums geht und auch eine große Schutzabdeckung erfordert.

Aus der DE 10 2009 055 759 A1 ist ein Befestigungssystem für eine Abschirmungsmanschette bekannt, die motorraumseitig um einen Faltenbalg angeordnet ist, um einen thermischen Schutz für die Lenkspindel und ein Lenkspindel-Gleitring-Lager bereitzustellen. Der Faltenbalg umgibt die Lenkspindel in einem Durchtrittsbereich durch eine Stirnwand. Die Abschirmungsmanschette ist mit einem Ende an der Stirnwand angeordnet. An ihrem anderen, motorraumseitigen Ende weist die Abschirmmanschette einen Rastring auf, in den der Faltenbalg mit einem korrespondierenden Rastring seines Lenkspindel-Gleitring-Lagers in axialer Richtung einrastet und so an der Abschirmungsmanschette fixiert wird. Die Abschirmungsmanschette besteht aus einem elastischen Material, insbesondere Silikon, und sie beansprucht zusätzlichen Bauraum um den Faltenbalg herum.

Der Erfindung liegt die Aufgabe zugrunde, eine Lenksäule mit den Merkmalen des Oberbegriffs des unabhängigen Patentanspruchs 1 aufzuweisen, deren Schutzabdeckung nur wenig Bauraum beansprucht, Vorteile bei der Montage aufweist und dennoch kostengünstig herstellbar ist.

Die Aufgabe der Erfindung wird erfindungsgemäß durch eine Lenksäule für ein Kraftfahrzeug mit den Merkmalen des unabhängigen Patentanspruchs 1 gelöst. Bevorzugte Ausgestaltungen der Erfindung sind den abhängigen Patentansprüchen 2 bis 10 zu entnehmen.

Der erfindungsgemäßen Lenksäule für ein Kraftfahrzeug liegt die Erkenntnis zugrunde, dass bei gleichbleibender Bewegungsfreiheit eines Drehgelenks ihrer Lenkspindel, über das eine Antriebswelle und eine Abtriebswelle der Lenkspindel drehbar und verschwenkbar verbunden sind, eine Schutzabdeckung, die die Lenkspindel und insbesondere das Drehgelenk der Lenkspindel zu einem Fußraum des Kraftfahrzeugs hin abdeckt, hinsichtlich ihrer Bauform optimiert werden kann, wenn die Schutzabdeckung über ihre Befestigungseinrichtung drehfest an dem Lenkgetriebegehäuse angeschlossen wird, in dem die Abtriebswelle zwar drehbar gelagert ist, relativ zu dem die Abtriebswelle aber nicht verschwenkbar ist. Da das Lenkgetriebegehäuse und die an diesem befestigte Schutzabdeckung die Bewegungen der Abtriebswelle mitmachen, muss die Schutzabdeckung Raum nur noch für einen kleinen Teil der möglichen Bewegungen des Drehgelenks freihalten. Dadurch ist die Schutzabdeckung mit einer deutlich geringeren Baugröße als bislang herstellbar, sodass Material für die Fertigung der Schutzabdeckung eingespart werden kann. Vor allem kann aber der für die Schutzabdeckung zu Lasten des angrenzenden Fußraums benötigte Raum um das Drehgelenks der Lenkspindel klein gehalten werden.

Die Schutzabdeckung ist vorzugsweise in der Fahrgastzelle des jeweiligen Kraftfahrzeugs an dem Lenkgetriebegehäuse befestigt. Dazu kann sich ein Teil des Lenkgetriebegehäuses durch ein Stirnwandblech der Karosserie des Kraftfahrzeugs bis in die Fahrgastzelle erstrecken. Dieser Teil kann ein fester Fortsatz oder ein separater Anbau des Lenkgetriebegehäuses sein. Zumindest ist er im Betrieb der Lenksäule starr gegenüber dem Rest des Lenkgetriebegehäuses angeordnet. Eine Abdichtung der Lenkspindel gegenüber dem Stirnwandblech kann dabei auf der Motorraumseite zwischen dem Lenkgetriebegehäuse und dem Stirnwandblech ausgebildet sein.

Die Schutzabdeckung der erfindungsgemäßen Lenksäule weist einen Schutzmantel auf, mit dem sich die Schutzabdeckung entlang der Lenkspindel von dem Bereich der Abtriebswelle, in dem die Schutzabdeckung über die Befestigungseinrichtung an dem Lenkgetriebegehäuse befestigt ist, über das Drehgelenk hinweg bis in den Bereich der Antriebswelle erstreckt. Der Schutzmantel der Schutzabdeckung deckt die Lenkspindel zu der dem Fußraum zugewandten Seite hin ab. Auf der dem Fußraum abgewandten Seite ist der Schutzmantel hingegen offen. Durch den zu einer Seite hin offen ausgebildeten Schutzmantel wird eine besonders einfache Montage der Schutzabdeckung erreicht, da diese einfach an die Lenkspindel angelegt und über die Befestigungseinrichtung befestigt werden kann. Die Öffnung des Schutzmantels kann dabei beliebig ausgestaltet sein, beispielsweise kann der Schutzmantel einen längs der Lenkspindel durchgehenden Schlitz aufweisen.

Die Schutzabdeckung ist über die Befestigungseinrichtung an dem Lenkgetriebegehäuse, in dem die Abtriebswelle drehbar gelagert ist, befestigt. Die Schutzabdeckung ist also nicht an der Lenkspindel selbst befestigt, sondern die Abtriebswelle ist auch relativ zu der Schutzabdeckung drehbar gelagert. Damit kann eine auf die Antriebswelle übertragene Drehung eines Lenkrads des Kraftfahrzeugs, an dem die Antriebswelle drehfest gelagert ist, trotz der das Drehgelenk der Lenkspindel abschirmenden Schutzabdeckung von dieser unbehindert auf die Abtriebswelle übertragen werden. Schwenkbewegungen der Antriebswelle gegenüber der Abtriebswelle um das Drehgelenk erfolgen typischerweise nicht über größere Winkel und bleiben bereits unbehindert, wenn der Schutzmantel der Schutzabdeckung in geringem Abstand zu der Antriebswelle verläuft. Konkret reicht ein etwas größerer Abstand des Schutzmantels zu der der Antriebswelle als ein minimaler Abstand zu der Abtriebswelle und dem Drehgelenk aus.

Die Schutzabdeckung kann grundsätzlich eine beliebige Form aufweisen. Beispielsweise kann der Schutzmantel der Schutzabdeckung längs der Lenkspindel geradlinig verlaufen. Da die Antriebswelle und die Abtriebswelle über das Drehgelenk der Lenkspindel unter einem Knickwinkel zueinander ausgerichtet sind, ist der Schutzmantel in einer bevorzugten Ausführungsform jedoch gekrümmt ausgebildet. Da die Wellen durch das Drehgelenk auch relativ zueinander verschwenkbar sind und der Knickwinkel des Drehgelenks damit veränderbar ist, ist der Schutzmantel insbesondere entsprechend einem mittleren Knickwinkel des Drehgelenks gekrümmt ausgebildet.

Die Befestigungseinrichtung, mit der die Schutzabdeckung an dem Lenkgetriebegehäuse befestigt ist, kann beliebig ausgestaltet sein. Beispielsweise kann sie als dauerhafte Klebeverbindung ausgebildet sein. In einer vorteilhaften Ausführungsform ist die Schutzabdeckung jedoch lösbar über die Befestigungseinrichtung an dem Lenkgetriebegehäuse befestigt, um für Reparatur- und/oder Wartungsarbeiten abnehmbar zu sein.

Die Schutzabdeckung kann beispielsweise lösbar an dem Lenkgetriebegehäuse befestigt sein, indem die Befestigungseinrichtung als Klemmverbindung mit einem separaten Klemmelement ausgebildet ist. Insbesondere ist die Befestigungseinrichtung jedoch als Rastelement ausgebildet. Das Lenkgetriebegehäuse kann eine derart zu der Kontur des Rastelements passenden Gegenkontur aufweisen, dass das Rastelement nach seinem Aufrasten auf das Lenkgetriebegehäuse in eine durch die Kontur bzw. Gegenkontur vorbestimmte Position gebracht und durch Formschluss sowohl längs der Lenkspindel als auch radial dazu in dieser Position gehalten wird.

Die Befestigung der Schutzabdeckung in einer dieser Richtungen kann auch aus einer Haftreibung zwischen der Befestigungseinrichtung und dem Lenkgetriebegehäuse resultieren. Anzustreben ist in jedem Fall, dass die Schutzabdeckung relativ zu dem Lenkgetriebegehäuse insbesondere weder drehbar noch verschiebbar ist. Dazu können/kann die Oberfläche der Befestigungseinrichtung, die an dem Lenkgetriebegehäuse anliegt, und/oder die Oberfläche der Befestigungseinrichtung zusätzlich beschichtet sein, um so bspw. deren Reibungseigenschaften zu optimieren.

Das Rastelement kann beispielsweise als radial aufrastbarer Teilring ausgebildet sein. Für eine besonders einfache Montage weist das Lenkgetriebegehäuse dazu eine an den Teilring angepasste Befestigungsnut auf. Zur Montage der Schutzabdeckung kann diese an das Lenkgetriebegehäuse angelegt werden. Durch ein Ausüben einer Kraft radial zu der Haupterstreckungsrichtung der Schutzabdeckung kann das Rastelement dann in die Befestigungsnut des Lenkgetriebegehäuses einrasten. So kann die Schutzabdeckung in seine gewünschte Endposition, in der es die Lenkspindel zu dem Fußraum des Kraftfahrzeugs hin abdeckt, gebracht werden, insbesondere auch erst dann, wenn die Lenkspindel und alle anderen restlichen Teile der Lenksäule schon fertig montiert sind.

In einer vorteilhaften Ausführungsform der erfindungsgemäßen Lenksäule weist die Schutzabdeckung eine Anschlusseinrichtung auf, die am der Befestigungseinrichtung abgekehrten Ende angeordnet ist und über die die Schutzabdeckung drehbar an die Antriebswelle angeschlossen ist. Die Anschlusseinrichtung schränkt also die Drehung der Lenkspindel nicht ein, aber sie stellt neben der an dem Lenkgetriebegehäuse befestigten Befestigungsvorrichtung einen weiteren Haltepunkt für die Schutzabdeckung dar, sodass ihre Anordnung an der Lenkspindel stabilisiert wird. Die Anschlusseinrichtung kann damit eine Verliersicherung der Schutzabdeckung darstellen. Die Anschlusseinrichtung kann auch zur Abdeckung des Drehgelenks in Richtung der Antriebswelle der Lenkspindel beitragen.

Zum Anschließen der Schutzabdeckung an die Antriebswelle kann die Anschlusseinrichtung die Antriebswelle teilweise umgreifen. Dabei umgreift die Anschlusseinrichtung die Antriebswelle mit Spiel, sodass diese drehbar in der Schutzabdeckung gelagert ist.

In einer besonders vorteilhaften Ausführungsform umgreift die Anschlusseinrichtung die Antriebswelle dabei mit einem Spiel, das in Richtung des Knickwinkels des Drehgelenks größer ist als quer dazu. Quer zu der Richtung des Knickwinkels reicht wenig Spiel aus, da dieses lediglich Raum für eine Drehung der Antriebswelle geben muss. Hingegen ist es vorteilhaft, wenn die Anschlusseinrichtung in Richtung des Knickwinkels Weg für eine Verschwenkung der Antriebswelle relativ zu der Abtriebswelle gibt. Vorzugsweise ist dabei das Spiel gegenüber der Antriebswelle in Richtung des Knickwinkels um 20 % größer als quer zu der Richtung des Knickwinkels. Beispielsweise kann die Anschlusseinrichtung dazu als ovaler Teilring ausgebildet sein, dessen maximaler Radius in Richtung des Knickwinkels liegt.

Die Lenksäule kann aus beliebigen Materialien gefertigt sein. Beispielsweise können hierbei Materialien wie Stahl, faserverstärkte Kunststoffe o. ä. zum Einsatz kommen. Insbesondere bei der Schutzabdeckung können der Schutzmantel und die Befestigungseinrichtung sowie gegebenenfalls die Anschlusseinrichtung separat gebildet oder aus unterschiedlichen Materialien gefertigt sein. In einer vorteilhaften Ausführungsform ist die Schutzabdeckung jedoch einstückig ausgebildet. Insbesondere kann die Schutzabdeckung dazu als einstückiges Formteil aus Kunststoff gefertigt sein. Um unterschiedliche Elastizitäten, beispielsweise eine höhere Elastizität im Bereich des Schutzmantels und gegebenenfalls der Anschlusseinrichtung als im Bereich der Befestigungseinrichtung, zu erreichen, kann die Schutzabdeckung dann mit unterschiedlichen Wandstärken und/oder aus - beispielsweise in sogenannter 2K-Technik - unterschiedlichen Materialien ausgebildet sein. Sie kann aber auch mit einer gleichbleibenden Wandstärke aus nur einem Material ausgebildet sein.

Die Schutzabdeckung deckt die Lenkspindel zu dem Fußraum des Kraftfahrzeugs hin ab. Insbesondere wird dadurch das Gelenk gegenüber dem Fußraum abgeschirmt, sodass beispielsweise ein Fahrer vor einer Berührung mit dem Gelenk geschützt ist. In einer vorteilhaften Ausführungsform ist die Schutzabdeckung dazu als Crashpad ausgebildet, um den Fahrer nicht nur vor einer Berührung mit dem Gelenk zu schützen, sondern z. B. durch eine Polsterung oder eine besondere Durchstoßfestigkeit der Schutzabdeckung weiteren Schutz bereitzustellen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Wenn hingegen nur die genaue Anzahl eines Merkmals angegeben werden soll, findet das Adjektiv "genau" vor dem jeweiligen Merkmal Verwendung. Diese Merkmale können durch andere Merkmale ergänzt werden oder die einzigen Merkmale sein, aus denen das jeweilige Erzeugnis besteht.

Im Folgenden wird die Erfindung anhand in den Figuren dargestellter bevorzugter Ausführungsbeispiele weiter erläutert und beschrieben.
Fig. 1 zeigt einen an ein Lenkgetriebegehäuse angrenzenden Bereich einer erfindungsgemäßen Lenksäule mit einer montierten Schutzabdeckung.
Fig. 2 zeigt den Bereich der erfindungsgemäßen Lenksäule gemäß Fig. 1 mit der unmontierten Schutzabdeckung.

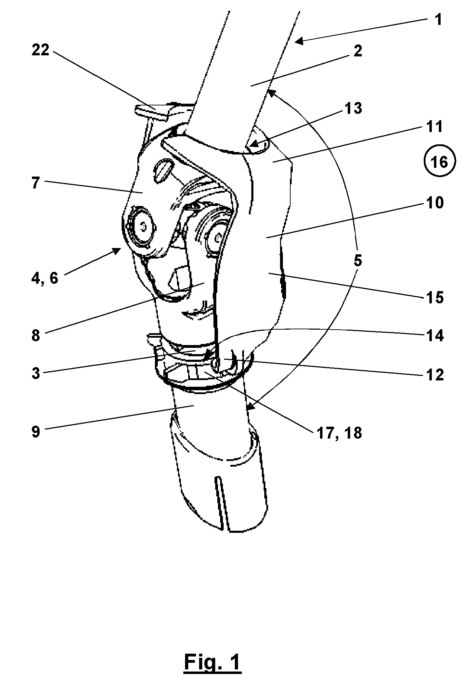

Fig. 1 zeigt eine erfindungsgemäße Lenksäule mit einer Lenkspindel 1, bei der eine Antriebswelle 2 und eine Abtriebswelle 3 über ein Drehgelenk 4 drehbar und verschwenkbar miteinander verbunden sind. Die Wellen 2, 3 sind dabei unter einem Knickwinkel 5 des Drehgelenks 4 zueinander angeordnet. Das in der Fig. 1 dargestellte Drehgelenk 4 ist als Kardangelenk 6 mit zwei zugehörigen Gelenkgabeln 7, 8 ausgebildet. Die Abtriebswelle 3 ist in einem Lenkgetriebegehäuse 9 drehbar gelagert ist, sodass die Abtriebswelle 3 relativ zu der Antriebswelle 2 nur zusammen mit dem Lenkgetriebegehäuse 9 verschwenkbar ist.

Das Drehgelenk 4 der Lenksäule ist durch eine Schutzabdeckung 10 abgedeckt. Die Schutzabdeckung 10 weist in ihren beiden Endbereichen 11, 12 Öffnungen 13, 14 auf, aus denen die Antriebswelle 2 und die Abtriebswelle 3 aus dem von der Schutzabdeckung 10 abgedeckten Bereich der Lenkspindel 1 heraustreten. Ein Schutzmantel 15 der Schutzabdeckung 10 erstreckt sich von dem Endbereich 12 um die Abtriebswelle 3, in dem die Schutzabdeckung 10 an einem Teil des Lenkgetriebegehäuse 9 befestigt ist, über das Drehgelenk 4 hinweg bis in den Endbereich 11 um die Antriebswelle 2. Dabei ist ein gekrümmter Verlauf des Schutzmantels 15 längs der Lenkspindel 1 an die Anordnung der Antriebswelle 2 und der Abtriebswelle 3 unter dem Knickwinkel 5 des Drehgelenks 4 angepasst.

Der Schutzmantel 15 weist eine durchgehende Öffnung auf, die sich bis zu den Öffnungen 13, 14 in den Endbereichen 11, 12 der Schutzabdeckung 10 fortsetzt und in diese übergeht. Aufgrund der Öffnung des Schutzmantels 15 ist die Schutzabdeckung 10 nachträglich in radialer Richtung auf die Lenkspindel 1 bzw. das Lenkgetriebegehäuse 9 aufsetzbar. Dennoch wird das Drehgelenk 4 durch den Schutzmantel 15 zu einem Fußraum 16 hin abgeschirmt.

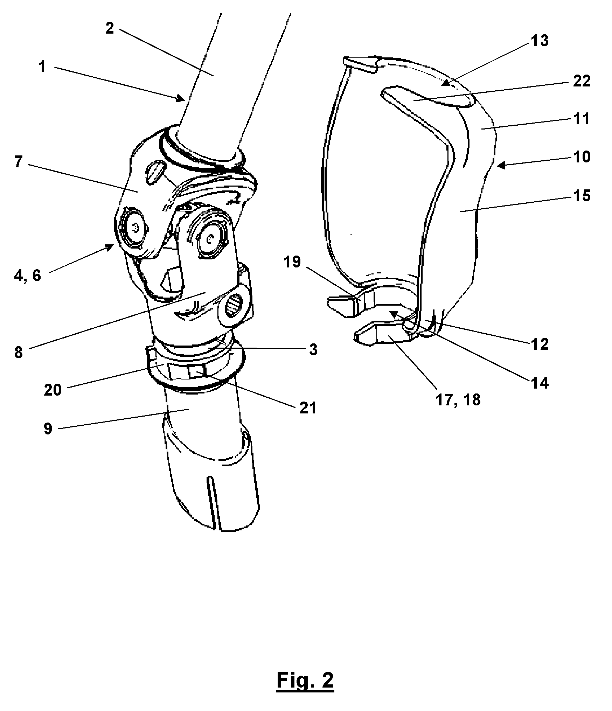

In dem Endbereich 12 ist die Schutzabdeckung 10 über eine Befestigungseinrichtung 17 drehfest an dem Lenkgetriebegehäuse 9 fixiert. Die Befestigungseinrichtung 17 ist hier als radial aufrastbarer Teilring 18 ausgeführt. Wie aus Fig. 2 ersichtlich ist, weist der aufrastbare Teilring 18 eine Kontur 19 auf, zu der das Lenkgetriebegehäuse 9 eine Befestigungsnut 20 mit einer passenden Gegenkontur 21 aufweist, sodass die Schutzabdeckung 10 formschlüssig an das Lenkgetriebegehäuse 9 angeschlossen werden kann. Die Schutzabdeckung 10 kann so in besonders einfacher Weise an eine bereits fertig montierte Lenkspindel 1 angebracht werden, indem die Schutzabdeckung 10 in die Befestigungsnut 20 des Lenkgetriebegehäuses 9 eingerastet wird. Durch die Kontur 19 bzw. die Gegenkontur 21 ist die Schutzabdeckung 10 mit dem Einrasten der Befestigungseinrichtung 17 automatisch in einer definierten Position gegenüber der Lenkspindel 1 angeordnet.

In der in den Figuren dargestellten Ausführung der Schutzabdeckung 10 ist der Endbereich 11, der der Antriebswelle 2 zugeordnet ist, mit einer Anschlusseinrichtung 22 versehen. Dazu ist die endseitige Öffnung 13 hier oval ausgebildet und umgibt die Antriebswelle 2 mit Spiel. Damit ist die Schutzabdeckung 10 zwar zur Verliersicherung auch an der Antriebswelle 2 gelagert, wobei diese aber gegenüber der Schutzabdeckung 10 frei drehbar bleibt. Zusätzlich wird durch die in Richtung des Knickwinkels 5 gestreckte Ausbildung der endseitigen Öffnung 13 erreicht, dass Raum für ein Verschwenken der Schutzabdeckung 10 relativ zu der Antriebswelle 2 bleibt, das aus einer Schwenkbewegung der Abtriebswelle 3 relativ zu der Antriebswelle 2 resultiert. Diese Schwenkbewegung wiederum kann auf eine Relativbewegung des Lenkgetriebegehäuses 9 gegenüber der Antriebswelle 2 zurückgehen. Die Schutzabdeckung 10 deckt das Drehgelenk 4 ab, ohne auftretende Relativbewegungen der über das Drehgelenk 4 verbundenen Wellen 2, 3 zu beschränken.

Der Teil des Lenkgetriebegehäuses 9 mit der Befestigungsnut 20 ragt bei einem mit der Lenksäule ausgestatteten Kraftfahrzeug durch ein Stirnwandblech der Karosserie bis in eine den Fußraum 16 umfassende Fahrgastzelle des Kraftfahrzeugs hinein. Die entsprechende Öffnung in der Stirnwand ist auf die im Betrieb des Kraftfahrzeugs maximal auftretenden Relativbewegungen des Lenkgetriebegehäuses 9 gegenüber der Karosserie abzustimmen. Eine Abdichtung dieser Durchführung der Lenkspindel 1 durch die Stirnwand kann auf der Motorraumseite zwischen der Stirnwand und dem Lenkgetriebegehäuse 9 beispielsweise durch einen Faltenbalg und/oder eine elastische Abschirmung erfolgen.

### BEZUGSZEICHENLISTE

- 1: Lenkspindel
- 2: Antriebswelle
- 3: Abtriebswelle
- 4: Drehgelenk
- 5: Kippwinkel
- 6: Kardangelenk
- 7: Gelenkgabel
- 8: Gelenkgabel
- 9: Lenkgetriebegehäuse
- 10: Schutzabdeckung
- 11: Endbereich
- 12: Endbereich
- 13: Öffnung
- 14: Öffnung
- 15: Schutzmantel
- 16: Fußraum
- 17: Befestigungseinrichtung
- 18: Teilring
- 19: Kontur
- 20: Befestigungsnut
- 21: Gegenkontur
- 22: Anschlusseinrichtung

## Patentansprüche

1. Lenksäule für ein Kraftfahrzeug mit
- einer Lenkspindel (1), die eine drehfest an einem Lenkrad gelagerte Antriebswelle (2) und eine drehbar in einem Lenkgetriebegehäuse (9) gelagerte Abtriebswelle (3) sowie ein dazwischen angeordnetes, geknicktes Drehgelenk (4) aufweist, und
- einer die Lenkspindel (1) zu einem Fußraum hin abdeckenden und sich nicht mit der Lenkspindel (1) drehenden Schutzabdeckung (10), die sich von einer Befestigungseinrichtung (17) im Bereich der Abtriebswelle (3) mit einem auf der dem Fußraum abgekehrten Seite offenen Schutzmantel (15) über das Drehgelenk (4) hinweg bis in den Bereich der Antriebswelle (2) erstreckt,
**dadurch gekennzeichnet, dass** die Schutzabdeckung (10) mit der Befestigungseinrichtung (17) an dem Lenkgetriebegehäuse (9) befestigt ist.

2. Lenksäule nach Anspruch 1, **dadurch gekennzeichnet, dass** die Schutzabdeckung (10) mit der Befestigungseinrichtung (17) an einem Teil des Lenkgetriebegehäuse (9) befestigt ist, das sich durch ein Stirnwandblech bis in eine Fahrgastzelle einer Karosserie des Kraftfahrzeugs erstreckt.

3. Lenksäule nach Anspruch 1 oder 2, **dadurch gekennzeichnet, dass** der Schutzmantel (15) einem mittleren Knickwinkel (5) des Drehgelenks (4) entsprechend gekrümmt ist.

4. Lenksäule nach einem der vorhergehenden Ansprüche, **dadurch gekennzeichnet, dass** die Schutzabdeckung (10) mit der Befestigungseinrichtung (16) lösbar an dem Lenkgetriebegehäuse (9) befestigt ist.

5. Lenksäule nach einem der vorhergehenden Ansprüche, **dadurch gekennzeichnet, dass** die Befestigungseinrichtung (17) ein auf das Lenkgetriebegehäuse (9) aufgerastetes Rastelement aufweist.

6. Lenksäule nach Anspruch 5, **dadurch gekennzeichnet, dass** das Rastelement als radial in eine Befestigungsnut (20) des Lenkgetriebegehäuse (9) eingerasteter Teilring (18) ausgebildet ist.

7. Lenksäule nach einem der vorhergehenden Ansprüche, **dadurch gekennzeichnet, dass** die Schutzabdeckung (10) an ihrem der Befestigungseinrichtung (17) ihres Schutzmantels (15) abgekehrten Ende eine Anschlusseinrichtung (22) aufweist, mit der sie drehbar an die Antriebswelle (2) angeschlossen ist.

8. Lenksäule nach Anspruch 7, **dadurch gekennzeichnet, dass** die Anschlusseinrichtung (22) die Antriebswelle (2) mit Spiel teilweise umgreift, wobei das Spiel gegenüber der Antriebswelle (2) in Richtung des Knickwinkels (5) des Drehgelenks (4) um mindestens 20 % größer ist als quer dazu.

9. Lenksäule nach einem der vorhergehenden Ansprüche, **dadurch gekennzeichnet, dass** die Schutzabdeckung (10) als einstückiges Formteil aus Kunststoff ausgebildet ist.

10. Lenksäule nach einem der vorhergehenden Ansprüche, **dadurch gekennzeichnet, dass** die Schutzabdeckung (10) als Crashpad ausgebildet ist.

## Claims

1. Steering column for a motor vehicle, having
- a steering spindle (1), which has an input shaft (2) mounted for conjoint rotation on a steering wheel, an output shaft (3) mounted rotatably in a steering gear housing (9), and a bent swivel joint (4) arranged therebetween, and
- a protective cover (10), which covers the steering spindle (1) with respect to a footwell, does not rotate with the steering spindle (1) and extends by means of a protective shell (15) open on the side facing away from the footwell from a fastening device (17) in the region of the output shaft (3), across the swivel joint (4), and into the region of the input shaft (2),
**characterized in that** the protective cover (10) is fastened to the steering gear housing (9) by means of the fastening device (17).

2. Steering column according to Claim 1, **characterized in that** the protective cover (10) is fastened by means of the fastening device (17) to part of the steering gear housing (9) which extends through a bulkhead panel and into a passenger cell of a body of the motor vehicle.

3. Steering column according to Claim 1 or 2, **characterized in that** the protective shell (15) is curved to match a mean deflection angle (5) of the swivel joint (4).

4. Steering column according to one of the preceding claims, **characterized in that** the protective cover (10) is fastened detachably to the steering gear housing (9) by means of the fastening device (16).

5. Steering column according to one of the preceding claims, **characterized in that** the fastening device (17) is a latching element latched onto the steering gear housing (9).

6. Steering column according to Claim 5, **characterized in that** the latching element is designed as a partial ring (18) latched radially into a fastening groove (20) in the steering gear housing (9).

7. Steering column according to one of the preceding claims, **characterized in that** the protective cover (10) has a connection device (22), by means of which it is connected rotatably to the input shaft (2), at its end remote from the fastening device (17) of its protective shell (15).

8. Steering column according to Claim 7, **characterized in that** the connection device (22) partially surrounds the input shaft (2) with a clearance, wherein the clearance relative to the input shaft (2) is greater by at least 20% in the direction of the deflection angle (5) of the swivel joint (4) than transversely thereto.

9. Steering column according to one of the preceding claims, **characterized in that** the protective cover (10) is designed as an integral molding made of plastic.

10. Steering column according to one of the preceding claims, **characterized in that** the protective cover (10) is designed as a crash pad.

## Revendications

1. Colonne de direction pour un véhicule automobile avec :
- un arbre de direction (1) comportant un arbre d'entraînement en entrée (2) disposé solidairement en rotation au niveau d'une roue motrice et un arbre d'entraînement en sortie (3) disposé de façon à pouvoir tourner dans un carter de direction (9) ainsi qu'une articulation pivotante (4) coudée disposée entre ; et
- un cache de protection (10) recouvrant l'arbre de direction (1) jusqu'à un espace de pied et ne tournant pas avec l'arbre de direction (1), ledit cache s'étendant d'un dispositif de fixation (17) situé dans la zone de l'arbre d'entraînement en sortie (3), avec une enveloppe de protection (15) ouverte sur le côté opposé à l'espace de pied, par-dessus l'articulation pivotante (4), jusque dans la zone de l'arbre d'entraînement en entrée (2) ;
**caractérisée en ce que** le cache de protection (10) est fixé au dispositif de fixation (17), au niveau du carter de direction (9).

2. Colonne de direction selon la revendication 1, **caractérisée en ce que** le cache de protection (10) est fixé au dispositif de fixation (17) au niveau d'une partie du carter de direction (9) s'étendant à travers une tôle de paroi avant jusque dans un habitacle d'une carrosserie du véhicule automobile.

3. Colonne de direction selon la revendication 1 ou 2, **caractérisée en ce que** l'enveloppe de protection (15) est incurvée selon un angle de coudure (5) central de l'articulation pivotante (4).

4. Colonne de direction selon l'une quelconque des revendications précédentes, **caractérisée en ce que** le cache de protection (10) est fixé au dispositif (16) de façon amovible au niveau du carter de direction (9).

5. Colonne de direction selon l'une quelconque des revendications précédentes, **caractérisée en ce que** le dispositif de fixation (17) comporte un élément d'arrêt encliqueté sur le carter de direction (9).

6. Colonne de direction selon la revendication 5, **caractérisée en ce que** l'élément d'arrêt est réalisé sous la forme d'une bague partielle (18) encliquetée dans le plan radial dans une encoche de fixation (20) du carter de direction (9).

7. Colonne de direction selon l'une quelconque des revendications précédentes, **caractérisée en ce que** le cache de protection (10) comporte, au niveau de son extrémité opposée au dispositif de fixation (17) de son enveloppe de protection (15), un dispositif de jonction (22) à l'aide duquel il est relié de façon pivotante à l'arbre d'entraînement en entrée (2).

8. Colonne de direction selon la revendication 7, **caractérisée en ce que** le dispositif de jonction (22) enserre en partie l'arbre d'entraînement en entrée (2) avec un certain jeu, le jeu étant plus important d'au moins 20 % dans la direction, par rapport à l'arbre d'entraînement en entrée (2), de l'angle de coudure (5) de l'articulation pivotante (4) que transversalement à cette direction.

9. Colonne de direction selon l'une quelconque des revendications précédentes, **caractérisée en ce que** le cache de protection (10) est réalisé en matière plastique sous la forme d'une pièce moulée d'un seul tenant.

10. Colonne de direction selon l'une quelconque des revendications précédentes, **caractérisée en ce que** le cache de protection (10) est réalisé sous la forme d'un tapis de chute et de protection.
